# EUROPEAN PATENT APPLICATION

(11) **EP 4 818 773 A1**
(43) Date of publication of application: **07.10.2026**
(21) Application number: 24897711.8
(22) Date of filing: 29.11.2024
(51) Int. Cl.: G02B 5/30, B32B 7/022, B32B 7/023, B32B 27/40, G02B 1/04, G02C 7/12

(54) **POLARIZING LAMINATE AND OPTICAL LENS**

(30) Priority: 30.11.2023 JP 2023202645
(71) Applicant: Daicel-Evonik Corporation, Tokyo 163-0913 (JP)
(72) Inventor: FUJINAKA, Toshihiko, Tokyo 163-0913 (JP); OMAE, Hitomi, Tokyo 163-0913 (JP); AKAGI, Koki, Tokyo 163-0913 (JP); FUJIKI, Daisuke, Tokyo 163-0913 (JP)
(74) Representative: Grünecker Patent- und Rechtsanwälte PartG mbB
(86) International application number: PCT/JP2024/042417
(87) International publication number: WO 2025/116030

(57) **Abstract**

Provided is a polarizing laminate in which a first protective layer and a second protective layer are laminated onto the two surfaces of a polarizing layer with an adhesive layer therebetween, the polarizing laminate being characterized in that: if the peel strength of the polarizing laminate is measured under conditions in which the tensile speed is 100 mm/min, then the peel strength is 2.0-30.0 N/10 mm; and the absolute value of the difference between the peel strength between the polarizing layer and the first protective layer and the peel strength between the polarizing layer and the second protective layer is 0.2-8.0 N/10 mm.

## Description

### Technical Field

The present disclosure relates to a polarizing laminate and an optical lens.

### Background Art

Optical lenses are used for antiglare glasses, sunglasses, goggles, prescription glasses, and the like in outdoor activities such as climbing, fishing, and baseball, and in driving of vehicles for the purpose of shielding reflected light from road surfaces, wall surfaces, snow surfaces, water surfaces, and the like. This optical lens has a laminated structure in which a lens body and a polarizing layer are laminated with an adhesive layer interposed therebetween, and a protective layer is usually laminated on a surface of the polarizing layer.

Patent Document 1 discloses, as a polarizing laminate capable of efficiently imparting excellent characteristics with a simple structure, a polarizing laminate including a polarizing sheet layer in which protective layers are laminated on both surfaces of a polarizing layer with an adhesive interposed therebetween, wherein the adhesive includes an adhesive having an isocyanate group or a urethane group, and the protective layer includes a polyamide resin. Also disclosed is a lens including a polarizing laminate including a polarizing sheet layer in which protective layers are laminated on both surfaces of a polarizing layer, and a thermoformable resin layer thermally adhered to at least one of the protective layers, wherein the thermoformable resin layer includes a polyamide resin.

Patent Document 2 discloses a functional lens for mounting in a mounting groove of a frame portion, in which a lens body, an adhesive layer, and an optical functional layer are directly or indirectly laminated in this order, wherein an end surface with respect to the mounting groove is formed in a form in which a top portion is located on a mounting side with respect to the adhesive layer in a thickness direction.

### Citation List

### Patent Document

Patent Document 1: JP 2006-227591 A
Patent Document 2: WO 2016/158680

### Summary of Invention

### Technical Problem

In recent years, product development based on the viewpoint of SDGs (sustainable development goals) has been required. From the viewpoint of SDGs, the recyclability of products is one of important characteristics. However, in Patent Documents 1 and 2, no consideration has been made on the recyclability of the lens. For example, in Patent Document 1, a polyamide resin is used as the thermoformable resin layer, and the polarizing laminate includes an adhesive having an isocyanate group or a urethane group or a polarizing layer. Thus, to recycle the thermoformable resin layer in the lens, it is necessary to take out only the thermoformable resin layer from the lens. However, usually, the thermoformable resin layer and the polarizing laminate are firmly adhered to each other from the viewpoint of durability. Thus, the inventors of the present invention have conceived that it is not easy to take out only the thermoformable resin layer from the lens.

An object of the present disclosure is to provide an optical lens having both recyclability and durability, and to provide a polarizing laminate capable of providing the optical lens.

### Solution to Problem

The present disclosure relates to the following contents.
[1] A polarizing laminate comprising:
   a first protective layer; and
   a second protective layer,
   the first protective layer being laminated on a surface of a polarizing layer with an adhesive layer interposed between the polarizing layer and the first protective layer, the second protective layer being laminated on another surface of the polarizing layer with an adhesive layer interposed between the polarizing layer and the second protective layer,
   wherein
   the polarizing laminate has a peel strength of from 2.0 to 30.0 N/10 mm as measured under a condition of a tensile speed of 100 mm/min, and
   an absolute value of a difference between a peel strength between the polarizing layer and the first protective layer and a peel strength between the polarizing layer and the second protective layer is from 0.2 to 8.0 N/10 mm.
[2] The polarizing laminate according to [1], wherein the adhesive layer is a layer including a cured product of a urethane adhesive.
[3] The polarizing laminate according to [1] or [2], wherein the adhesive layer has a thickness of from 1.0 to 100.0 µm.
[4] The polarizing laminate according to any one of [1] to [3], wherein one or more selected from the group consisting of the first protective layer and the second protective layer contain a polyamide resin.
[5] The polarizing laminate according to [4], wherein the polyamide resin has a structure represented by Formula (4): 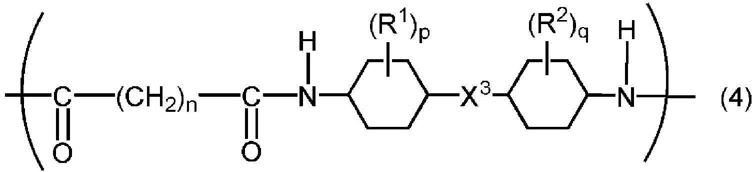 where
   R¹ and R² each independently represent an alkyl group having carbon number of 1 to 4,
   X³ represents an alkylene group having carbon number of 1 to 6,
   n represents an integer of 1 or more, and
   p and q each independently represent an integer of from 0 to 4.
[6] The polarizing laminate according to any one of [1] to [5], wherein one or more selected from the group consisting of the first protective layer and the second protective layer have a retardation value of 300 nm or more.
[7] The polarizing laminate according to any one of [1] to [6], wherein the polarizing layer contains polyvinyl alcohol.
[8] An optical lens comprising:
   the polarizing laminate according to any one of [1] to [7]; and
   a substrate layer.
[9] The optical lens according to [8], comprising the substrate layer on a surface of the polarizing laminate.
[10] The optical lens according to [9], wherein the substrate layer contains a polyamide resin having a structure represented by Formula (4): 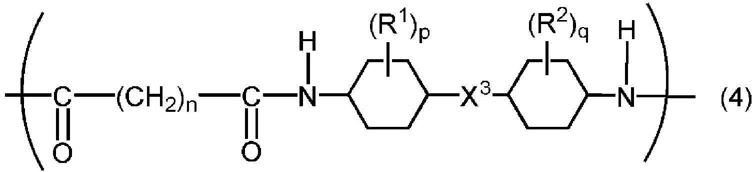 where
   R¹ and R² each independently represent an alkyl group having carbon number of 1 to 4,
   X³ represents an alkylene group having carbon number of 1 to 6,
   n represents an integer of 1 or more, and
   p and q each independently represent an integer of from 0 to 4.

### Advantageous Effects of Invention

The present disclosure can provide an optical lens having both recyclability and durability, and a polarizing laminate that provides the optical lens.

### Brief Description of Drawings

FIG. 1 is a sectional view of a polarizing laminate according to an embodiment of the present disclosure.
FIG. 2 is a sectional view of an optical lens according to an embodiment of the present disclosure.

### Description of Embodiments

The present disclosure will be described below with reference to specific embodiments. In the present specification, when a lower limit value and an upper limit value of a numerical range are separately indicated, the numerical range can be a combination of any lower limit value and any upper limit value among the range. In the present disclosure, a numerical range expressed using "(from) A to B" means a numerical range including the lower limit and the upper limit which are end points.

### Polarizing Laminate

A polarizing laminate of the present disclosure is a polarizing laminate including a first protective layer; and a second protective layer, the first protective layer being laminated on a surface of a polarizing layer with an adhesive layer interposed between the polarizing layer and the first protective layer, the second protective layer being laminated on another surface of the polarizing layer with an adhesive layer interposed between the polarizing layer and the second protective layer, wherein the polarizing laminate has a peel strength (hereinafter, it is also simply referred to as peel strength of the polarizing laminate) of from 2.0 to 30.0 N/10 mm as measured under a condition of a tensile speed of 100 mm/min. Specifically, the peel strength of the polarizing laminate is defined as a smaller value of a first peel strength and a second peel strength. The first peel strength is a peel strength between the polarizing layer and the first protective layer, and the second peel strength is the peel strength between the polarizing layer and the second protective layer. Using a test piece having a width of 10 mm, which is produced from the polarizing laminate, the first peel strength and the second peel strength are measured under the condition of a tensile speed of 100 mm/min, according to JIS K6854 T-type peel test method.

By setting the tensile speed to 100 mm/min, a situation similar to the peeling behavior while the lens is put on can be easily reproduced, and the intensity of the peel strength is emphasized. Thus, the stability of the adhesion behavior is easily understood. The peel strength of the polarizing laminate is the peel strength in a layer thickness direction.

When the peel strength of the polarizing laminate is less than 2.0 N/10 mm, in the optical lens including the polarizing laminate, the strength of the polarizing laminate portion becomes insufficient, and the lens is poor in durability. When the peel strength of the polarizing laminate exceeds 30.0 N/10 mm, the strength of the polarizing laminate portion is too high, and thus, the lens is poor in recyclability.

The peel strength of the polarizing laminate is preferably from 5.0 to 25.0 N/10 mm, more preferably from 8.0 to 20.0 N/10 mm.

The peel strength of the polarizing laminate can be adjusted by changing the amount and type of the material used for the adhesive layer, changing the thickness of the adhesive layer, or the like. For example, when a plurality of materials are used for the adhesive layer, the peel strength can be adjusted by changing the mixing ratio of the materials. The method for measuring the peel strength of the polarizing laminate will be described later.

Further, in the polarizing laminate of the present disclosure, an absolute value of a difference between the peel strength between the polarizing layer and the first protective layer (first peel strength) and the peel strength between the polarizing layer and the second protective layer (second peel strength) is from 0.2 to 8.0 N/10 mm. When the absolute value of the difference between the first peel strength and the second peel strength is less than 0.2 N/10 mm, the peeling interface is not stabilized, and a part of the material of the polarizing layer may adhere to the first protective layer side or adhere to the second protective layer side when each layer is peeled for recycling the polarizing sheet or the polarizing lens. That is, the peelability decreases, and thus, it is difficult to recover the protective layer. On the other hand, when the absolute value of the difference between the first peel strength and the second peel strength exceeds 8.0 N/10 mm, the peeling position at the interface between the first protective layer and the polarizing layer or the peeling position at the interface between the second protective layer and the polarizing layer cannot be controlled, and the peeling can be performed only from the interface having low peel strength. That is, the peelability decreases.

The absolute value of the difference between the first peel strength and the second peel strength is preferably from 0.5 to 8.0 N/10 mm, more preferably from 1.0 to 8.0 N/10 mm. The absolute value may be from 2.0 to 7.0 N/10 mm or from 3.0 to 7.0 N/10 mm.

The absolute value of the difference between the first peel strength and the second peel strength can be changed by changing the type and thickness of the adhesive layer used at the interface between each protective layer and the polarizing layer, performing corona treatment or plasma treatment on the surface of the protective layer on the adhesive layer side, and changing the irradiation intensity in corona treatment or plasma treatment. According to the corona treatment or the plasma treatment, because the number of active groups contributing to the chemical reaction on the surface portion of the protective layer increases, the protective layer and the adhesive layer are more likely to adhere strongly, and the peel strength increases. A value of surface tension is used as an index of the degree of activation of the protective layer. Specifically, when the irradiation intensity at the time of treating the protective layer is increased, the degree of activation increases, and the surface tension also increases. As a result, the peel strength increases. On the other hand, when the irradiation intensity is weakened, the improvement in surface tension is small, and thus, the improvement in peel strength is also small.

The value of the surface tension of the surface of the protective layer on the adhesive layer side is preferably 35 dyne or more. The upper limit of the value of the surface tension is not particularly limited, but the value of the surface tension may be from 35 to 70 dyne.

By reducing the difference between the surface tension of the first protective layer and the surface tension of the second protective layer through corona treatment or plasma treatment, the absolute value of the difference between the first peel strength and the second peel strength tends to be small.

It is preferable that the surface on the adhesive layer side among the surfaces of one or more protective layers selected from the group consisting of the first protective layer and the second protective layer be subjected to corona treatment. It is also preferable that the surface on the adhesive layer side of either the first protective layer or the second protective layer be subjected to corona treatment, and the surface on the adhesive layer side of the other protective layer be not subjected to corona treatment.

It is also effective that the first protective layer and the second protective layer are not simultaneously bonded to the polarizing layer. Specifically, the first protective layer and the polarizing layer are bonded to each other using an adhesive layer as a first step, and then the second protective layer and the laminate produced in the first step are bonded to each other using an adhesive layer as a second step. In the second step, the second protective layer is bonded to the polarizing layer side of the laminate produced in the first step with an adhesive layer, whereby a desired polarizing laminate can be produced. At this time, the absolute value of the difference between the first peel strength and the second peel strength can be increased by performing a step of winding the laminate produced in the first step into a roll shape between the first step and the second step. This is possibly because a stress is generated inside the adhesive layer by winding the laminate in a roll shape, and the stress reduces the adhesive strength.

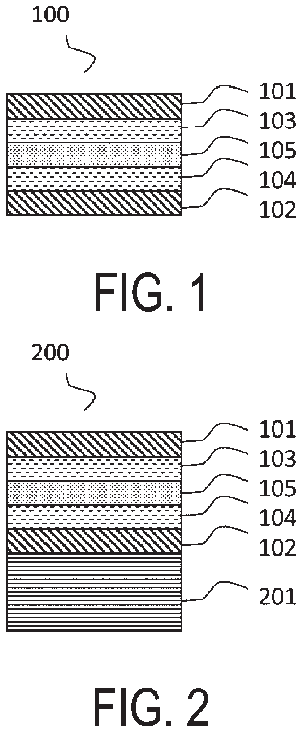

In the polarizing laminate (100), the first protective layer (101) is laminated on a surface of the polarizing layer (105) with the adhesive layer (103) interposed between the polarizing layer (105) and the first protective layer (101), and the second protective layer (102) is laminated on another surface of the polarizing layer (105) with the adhesive layer (104) interposed between the polarizing layer (105) and the second protective layer (102), as described above (FIG. 1). The polarizing laminate may have another layer. That is, the polarizing laminate may include a polarizing layer 105, a first adhesive layer 103 provided on a first surface of the polarizing layer, a second adhesive layer 104 provided on a second surface of the polarizing layer, a first protective layer 101 provided on the side opposite to the side on which the polarizing layer is located as viewed from the first adhesive layer, and a second protective layer 102 provided on the side opposite to the side on which the polarizing layer is located as viewed from the second adhesive layer. Hereinafter, each layer that can constitute the polarizing laminate will be described.

### Polarizing Layer

The polarizing layer is a layer containing a material having polarizability. The polarizing layer is not particularly limited, but for example, a stretched film containing a dichroic compound such as iodine or a dichroic dye and a polarizing resin such as polyvinyl alcohol can be used. The stretched film can be prepared by, for example, subjecting a polyvinyl alcohol film produced by stretching polyvinyl alcohol to a treatment such as a dyeing treatment with a dichroic compound, a crosslinking treatment, or a stretching treatment (uniaxial stretching treatment at a magnification of about 3 to 7 times). That is, the polarizing layer may contain a polarizing resin and may further contain a dichroic compound. The polarizing layer preferably contains polyvinyl alcohol, and more preferably further contains iodine.

The polyvinyl alcohol is not particularly limited, and examples thereof include a saponified product of a polymer of vinyl acetate, a saponified product of a copolymer of vinyl acetate and a copolymerizable monomer other than vinyl acetate (for example, unsaturated carboxylic acid, unsaturated sulfonic acid, and cationic monomer), and derivatives from these saponified products (for example, formal and acetal). Examples of the derivative include polyvinyl acetal and polyvinyl butyral.

The number-average polymerization degree of the polyvinyl alcohol is not particularly limited, and examples thereof include from 1000 to 10000 and from 3000 to 5000. The degree of saponification of the polyvinyl alcohol is not particularly limited, but is preferably 85 mol% or more, more preferably 90 mol% or more (for example, from 90 to 100 mol%), still more preferably 95 mol% or more. Preferable examples include from 90 to 100 mol%, from 95 to 100 mol%, and from 98 to 100 mol%.

The thickness of the polarizing layer is not particularly limited, but it may be, for example, from 5.0 to 100.0 µm, preferably from 10.0 to 80.0 µm, more preferably from 20.0 to 60.0 µm.

### Protective Layer

The protective layers (the first protective layer and the second protective layer) are layers that protect the polarizing layer. The protective layers are not particularly limited as long as they can protect the polarizing layer, and an example thereof is a resin layer. The resin layer may contain one or more selected from the group consisting of a thermoplastic resin and a thermosetting resin, preferably contains a thermoplastic resin, more preferably, the resin layer is composed of a thermoplastic resin. Examples of the thermoplastic resin include an acetyl cellulose resin such as triacetyl cellulose, a polycarbonate resin, a polyamide resin, a polyester resin, an olefin resin, an acrylic resin, and a urethane resin. Among these, a polyamide resin is preferable.

The polyamide resin is not particularly limited, and examples thereof include an aliphatic polyamide resin and an aromatic polyamide resin. The aliphatic polyamide resin may have a linear structure, a branched structure, or a cyclic structure. Among these, the aliphatic polyamide resin preferably has a cyclic structure. That is, the polyamide resin is preferably an alicyclic polyamide resin. The alicyclic polyamide resin is excellent in transparency. The alicyclic polyamide resin is available, for example, as TROGAMID (manufactured by Polyplastics-Evonik Corporation) or Grilamid (manufactured by EMS).

The resin layer may contain a single type of these resins alone or two or more types thereof in combination. The protective layers (the first protective layer and the second protective layer) may contain the same material or different materials. That is, one or more selected from the group consisting of the first protective layer and the second protective layer may contain the above-described materials.

The alicyclic polyamide resin is produced by combining suitable components from among one or more components selected from the group consisting of alicyclic diamines and alicyclic dicarboxylic acids, aliphatic diamines other than alicyclic diamines, aliphatic dicarboxylic acids other than alicyclic dicarboxylic acids, and the like, and performing polymerization using a known method.

Examples of the alicyclic diamine include a compound represented by Formula (1) shown below.
[Chem. 1]

H₂N-A¹-X¹-A²-NH₂ (1)

(In Formula (1), A¹ and A² each independently represent a cycloalkylene group having carbon number of 5 to 10 (preferably 6 to 8, more preferably 6), and X¹ represents an alkylene group having carbon number of 1 to 6 (preferably 1 to 4, more preferably 1 to 3).)

Examples of the alicyclic dicarboxylic acid include a compound represented by Formula (2) shown below.
[Chem. 2]

HOOC-A³-X²-A⁴-COOH (2)

(In Formula (2), A³ and A⁴ each independently represent a cycloalkylene group having carbon number of 5 to 10 (preferably 6 to 8, more preferably 6), and X² represents an alkylene group having carbon number of 1 to 6 (preferably 1 to 4, more preferably 1 to 3).)

When an alicyclic diamine is used, it is preferable to use an aliphatic dicarboxylic acid other than alicyclic dicarboxylic acids (hereinafter, also referred to as aliphatic dicarboxylic acid A). Examples of the aliphatic dicarboxylic acid A include a compound represented by Formula (3) shown below.
[Chem. 3]

HOOC-(CH₂)ₘ-COOH (3)

(In Formula (3), m is an integer of 1 or more, preferably from 4 to 18, more preferably from 6 to 16, still more preferably from 8 to 14.)

The alicyclic polyamide resin preferably has a structure represented by Formula (4) shown below.

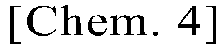

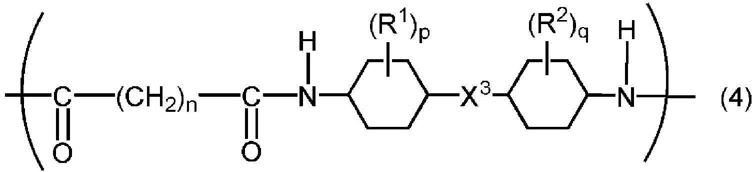

(In Formula (4), R¹ and R² each independently represent an alkyl group having carbon number of 1 to 4 (preferably 1 to 2), X³ represents an alkylene group having carbon number of 1 to 6 (preferably 1 to 4, more preferably 1 to 3), n represents an integer of 1 or more (preferably from 4 to 18, more preferably from 6 to 16, still more preferably from 8 to 14), and p and q each independently represent an integer of from 0 to 4 (preferably from 0 to 3, more preferably from 0 to 2, still more preferably from 0 to 1).)

The number-average molecular weight of the polyamide resin is not particularly limited, and it may be, for example, from 0.6 × 10⁴ to 3.0 × 10⁵, preferably from 0.6 × 10⁴ to 2.0 × 10⁵, more preferably from 1.0 × 10⁴ to 1.5 × 10⁵, still more preferably from 2.0 × 10⁴ to 1.0 × 10⁵. The number-average molecular weight of the polyamide resin can be measured by gel permeation chromatography (GPC), and can be determined in terms of polystyrene.

The thickness of the protective layer is not particularly limited, and it may be, for example, from 20.0 to 2000.0 µm, is preferably from 50.0 to 800.0 µm, more preferably from 80.0 to 600.0 µm, still more preferably from 100.0 to 500.0 µm. The thicknesses of the protective layers (the first protective layer and the second protective layer) may be the same or different.

The retardation values of the protective layers are not particularly limited, but one or more retardation values selected from the group consisting of the first protective layer and the second protective layer are preferably 300 nm or more, and in particular, the retardation value of the first protective layer is preferably 300 nm or more. By setting the retardation value of the first protective layer to 300 nm or more, generation of white spots in the protective layer can be suppressed. The retardation value is preferably from 300 to 20000 nm, more preferably from 350 to 15000 nm, still more preferably from 400 to 10000 nm, yet still more preferably from 450 to 7000 nm, particularly preferably from 500 to 3000 nm, yet particularly preferably from 550 to 2000 nm.

When the protective layer is formed by stretching, the retardation value is defined by Δn·d where Δn is the difference in refractive index between the refractive index in a stretching direction and the refractive index in a direction perpendicular to the stretching direction, and d is the thickness of the protective layer. The retardation value can be controlled by the stretch ratio in the production of the protective layer and the thickness of the protective layer.

The retardation values of the protective layers (the first protective layer and the second protective layer) may be the same or different.

### Adhesive Layer

The adhesive layer is not particularly limited as long as the protective layer and the polarizing layer can be adhered to each other, but is preferably a layer containing a cured product of an adhesive. The adhesive may be a solution type adhesive or a hot melt type adhesive. The method for curing the adhesive is not particularly limited, and a known method can be used. For example, in the case of a solution type adhesive, a cured product of the adhesive can be produced by volatilizing the solvent contained in the adhesive solution. In the case of a two-component curable adhesive, a cured product of the adhesive can be produced by mixing a solution containing a main agent and a solution containing a curing agent. In the case of a hot melt type adhesive, a cured product of the adhesive can be produced by cooling and solidifying the melted adhesive.

Examples of the adhesive include a vinyl acetate adhesive, an acrylic adhesive, a polyester adhesive, a urethane adhesive, and an epoxy adhesive. Among these, a urethane adhesive is preferable.

The urethane adhesive refers to an adhesive containing a polyurethane resin or an adhesive containing an isocyanate component and a diol component. That is, the urethane adhesive may be a one-component adhesive containing a polyurethane resin, or may be a two-component curable adhesive containing an isocyanate component and a diol component (that is, a reactive curable adhesive). As the isocyanate component and the diol component, a urethane prepolymer produced by reacting an isocyanate component and a diol component can also be used.

The adhesive layer may contain a single type of these materials alone or two or more types thereof in combination. The adhesive layers (the first adhesive layer and the second adhesive layer) may contain the same material or different materials.

When the adhesive layer contains two or more materials, the blending ratio of each material is not particularly limited. For example, in the case of using a polyol component such as TM-593 (manufactured by Toyo Morton Co., Ltd.) and an isocyanate component such as CAT-RT85 (manufactured by Toyo Morton Co., Ltd.) as the urethane adhesive contained in the adhesive, when the content of the polyol component contained in the adhesive is 100 parts by mass, the content of the isocyanate component is preferably from 5 to 18 parts by mass, more preferably from 10 to 18 parts by mass. When the blending ratio is within the above-described range, the peel strength of the polarizing laminate is easily adjusted to the above-described range.

The vinyl acetate adhesive refers to an adhesive containing a vinyl acetate resin, the acrylic adhesive refers to an adhesive containing an acrylic resin, the polyester adhesive refers to an adhesive containing a polyester resin, and the epoxy adhesive refers to an adhesive containing an epoxy resin and a curing agent.

The thickness of the adhesive layer is not particularly limited, and it may be, for example, from 0.1 to 200.0 µm, and is preferably from 1.0 to 100 µm, more preferably from 1.5 to 80.0 µm, still more preferably from 2.0 to 50.0 µm, yet still more preferably from 3.0 to 25.0 µm, particularly preferably from 5.0 to 20.0 µm, yet particularly preferably from 5.0 to 15.0 µm. When the thickness of the adhesive layer is within the above-described range, the peel strength of the polarizing laminate can be easily adjusted within the above-described range.

The thicknesses of the adhesive layers (the first adhesive layer and the second adhesive layer) may be the same or different.

The shape of the polarizing laminate is not particularly limited, but it may be a flat plate shape or may be curved. The method for forming the polarizing laminate into a curved shape is not particularly limited, and an example thereof is a method in which a flat plate-shaped polarizing laminate is formed, and then the polarizing laminate is subjected to bending.

When the polarizing laminate has a curved shape, it may be more difficult to have both recyclability and durability. However, even in such a case, the polarizing laminate of the present disclosure can provide an optical lens having both recyclability and durability.

### Optical Lens

An optical lens of the present disclosure includes the polarizing laminate of the present disclosure and a substrate layer.

The material used for the substrate layer is not particularly limited, but the substrate layer preferably contains a resin, more preferably contains a polyamide resin. That is, the substrate layer is more preferably a polyamide resin layer. By containing a polyamide resin, an optical lens having high lightweight properties, toughness, and chemical resistance can be formed. As the resin, a resin described in the section of the protective layer can be used, and as the polyamide resin, a polyamide resin described in the section of the protective layer can be used.

The substrate layer may contain various additives, for example, stabilizers (heat stabilizers, ultraviolet absorbers, antioxidants, and the like), plasticizers, lubricants, colorants, flame retardants, and antistatic agents.

The thickness of the substrate layer is not particularly limited, and it may be, for example, from 1 to 20 mm, and is preferably from 1.2 to 10 mm, more preferably from 1.4 to 8 mm, still more preferably from 1.5 to 5 mm.

An optical lens 200 preferably includes a substrate layer 201 on a surface of the polarizing laminate (FIG. 2). FIG. 2 illustrates an embodiment in which the optical lens includes the substrate layer 201 on a surface of the second protective layer 102. That is, in FIG. 2, the substrate layer 201 is provided on the surface opposite to the side where the polarizing layer 105 is located as viewed from the second protective layer 102. The optical lens may include a substrate layer on a surface of the first protective layer 101. That is, the substrate layer 201 may be provided on the surface opposite to the side on which the polarizing layer 105 is located as viewed from the first protective layer 101.

With such a configuration, it becomes easy to control the adhesive force between the polarizing laminate and the substrate layer, and it becomes easy to have both recyclability and durability. With such a configuration, the protective layer (the first protective layer or the second protective layer) can be used for bonding to the substrate layer.

The method for locating the substrate layer on a surface of the polarizing laminate is not particularly limited, and an example thereof is a method in which a resin is injection-molded on the polarizing laminate, and the polarizing laminate and the substrate layer are bonded by thermal welding.

The optical lens may have another layer. For example, the optical lens may have a hard coat layer, an antireflection layer, an anti-fog layer, and the like. The positions of these layers are not particularly limited as long as these layers can exhibit their functions, but these layers preferably constitute the surface of the optical lens.

The shape of the optical lens is not particularly limited, but it may be a flat plate shape or a curved shape. Specifically, the lens shape may be a concave lens shape, a convex lens shape, or an uneven lens shape. The shape of the optical lens can be adjusted by a known method, and an example thereof is a method of injection molding a polyamide resin with respect to a polarizing laminate having a curved shape.

Hereinafter, methods for measuring and evaluating physical properties of the polarizing laminate and the optical lens will be described.

### Method for Measuring Peel Strength of Polarizing Laminate

The peel strength of the polarizing laminate is measured by producing a 10 mm wide test piece from the polarizing laminate according to JIS K6854 T-type peel test method, and performing a peel test on the test piece under the condition of a tensile speed of 100 mm/min using Autograph AG-X plus manufactured by Shimadzu Corporation.

Specifically, the peel strength at two positions each located on the corresponding surface of the polarizing layer of the polarizing laminate, that is, the peel strength between the first protective layer and the polarizing layer (first peel strength) and the peel strength between the second protective layer and the polarizing layer (second peel strength) are measured, and a smaller value of the first peel strength and the second peel strength is defined as the peel strength of the polarizing laminate.

First, a polarizing laminate is punched out using a Thomson blade to produce a test piece having a width of 10 mm and a length of 200 mm. When the first peel strength is measured, a cut is made in the first protective layer of the resulting test piece with a cutter or the like, and the polarizing laminate is curved with the cut portion facing outward, thereby producing a peeling start interface between the first protective layer and the polarizing layer. Then, the measurement is performed by sandwiching the side including the first protective layer between the upper chucks of the autograph and sandwiching the portion of the polarizing laminate other than the portion sandwiched between the upper chucks between the lower chucks of the autograph. The second peel strength is measured in the same manner as the measurement of the first peel strength.

The peel strength is then calculated by determining the mean peel force in Newtons (N) required to peel the test piece from the curve recording the peel of at least 100 mm, excluding the first 25 mm and the last 25 mm. From the resulting peel strengths, the absolute value of the difference between the first peel strength and the second peel strength is calculated.

### Method for Measuring Retardation Value

The retardation value of the protective layer can be measured by "KOBRA-WPR" (590 nm) manufactured by Otsuka Scientific Instruments. In the case of a laminate, a sharp cutting edge such as a cutter knife is inserted into the interface between the protective layer and the polarizing layer of the laminate to separate both layers. When the adhesive layer is attached to the protective layer, the measurement is performed with the protective layer portion to which the adhesive layer is not attached, or the adhesive layer is scraped off with a cutter knife or the like and the measurement is performed only with the resulting protective layer.

### Method for Evaluating Recyclability

A sample produced by pulverizing or remelting and thereby pelletizing a lens (substrate) after removing the peelable polarizing laminate from the optical lens is used to produce JIS K7139 dumbbell-shaped tensile test piece type A by injection molding. The tensile elongation at break of the produced test piece is measured in accordance with JIS K7161 using an autograph AG-X plus manufactured by Shimadzu Corporation under the condition of a tensile speed of 100 mm/min, and the recyclability is evaluated according to the following criteria. When the polarizing laminate cannot be peeled, a test piece is produced in the same manner as described above except that the optical lens is used without peeling, and the evaluation is performed.
A: Tensile yield elongation of 30% or more
B: Tensile elongation at break of less than 30%

### Method for Evaluating Durability

The lens is cut using a lens processing machine and thus, the lamination section is exposed on the peripheral end surface of the lens. The resulting lens is immersed in hot water at 100°C for 3 hours. The lens is removed from the hot water, and the water immersion from the periphery of the lens is visually observed. According to the following criteria, when the immersion depth is 2 mm or less, it is determined that the durability is good.
A: Immersion depth is 2 mm or less
B: Immersion depth is more than 2 mm

### Method for Evaluating Peelability

A cut is made with a cutter knife at the interface between the polarizing layer located on the convex surface of the lens and the first protective layer, and the cut is further made with the cutter knife up to the interface between the polarizing layer and the second protective layer. Then, peeling is performed at a target interface, and whether peeling can be performed at the target interface is visually confirmed.
A: Peeling can be performed at the target peeling interface, and the polarizing layer does not remain on the peeled protective layer.
B: Peeling can be performed at the target peeling interface, but the polarizing layer slightly remains on the peeled protective layer.
C: Peeling cannot be performed at the target peeling interface.

Each of the configurations, a combination of the configurations, and the like in each embodiment are an example, and addition, omission, substitution, and an additional change of the configurations can be appropriately made without departing from the spirit of the present invention. The present disclosure is not limited by the embodiments and is limited only by the claims.

### Examples

Hereinafter, the present disclosure will be specifically described with reference to examples. However, the present disclosure is not limited to the following examples.

### Example 1

An alicyclic polyamide resin (TROGAMID (trade name) myCX) was heated and melted using a film extruder adjusted to 280 to 300°C. Thereafter, the sheet extruded from the T die was cooled with a cooling roll, and uniaxially stretched at a stretch ratio of 1.50 times using rolls having different rotation speeds while being reheated, whereby a polyamide sheet having a thickness of 200 µm was produced. One surface of the resulting polyamide sheet was subjected to corona treatment, and a surface tension of 54 dyne was confirmed. For bonding, a polyurethane adhesive (two-component adhesive, "TM-593" and "CAT-RT85" manufactured by Toyo Morton Co., Ltd. were mixed at a mass ratio of 100:15) was applied to the corona-treated surface of the polyamide sheet, and thus, the polyurethane adhesive had a thickness of 10 µm. A surface of a polyamide sheet coated with an adhesive was adhered to one surface of a polarizing film (manufactured by Nippon Kayaku Co., Ltd.) containing polyvinyl alcohol and having a thickness of about 40 µm (first step). Then, the resulting laminate was wound around a cylindrical plastic core having a size of 6 inches.

Subsequently, as a second step, corona treatment was applied to one surface of the polyamide sheet in the same manner as in the first step, and a surface tension of 54 dyne was confirmed. On this surface, the same adhesive as in the first step was applied in a thickness of 10 µm, and the surface was adhered to the polarizing layer surface of the laminate produced in the first step to form a polarizing laminate (polarizing plate). The resulting polarizing plate was cut into a predetermined shape (a shape in which a pair of substantially quadrangular opposed edges was substantially warped outward in an arc shape) using a Thomson blade. The cut polarizing plate was preheated at about 100°C for 1 to 2 minutes, and then placed on a concave mold having a radius of curvature of 87 mm, the temperature of which was adjusted to about 100°C. Thereafter, vacuum suction was performed through a suction hole provided in the lower part of the mold, and bending was performed to produce a polarizing laminate (polarizing plate) having a curved surface shape (curved shape).

Then, a polarizing laminate having a curved surface shape was disposed on the concave surface of a lens mold installed in the injection molding machine, and the mold was closed. Thereafter, an alicyclic polyamide resin (TROGAMID (trade name) myCX) melt-kneaded at 280°C was injected at a pressure of 200 MPa to mold a polarizing laminate (polarizing lens).

The resulting polarizing lens was processed into a mounting lens shape by a lens processing machine to produce an optical lens in which a lens end surface after processing has a structure of the first protective layer 101/the first adhesive layer 103/the polarizing layer 105/the second adhesive layer 104/the second protective layer 102/the substrate layer 201.

### Examples 2 to 17

A polarizing laminate and an optical lens were produced in the same manner as in Example 1 except that the material used, the thickness of each layer, the presence or absence of stretching, and the presence or absence of corona treatment were changed to the contents in Table 1. Physical properties of the resulting polarizing laminate and optical lens are shown in Table 1. The materials used were specifically as follows.

When the resin was unstretched, the resin was heated and melted using a film extruder, and the sheet extruded from the T die was cooled with a cooling roll to produce a protective layer.

### Resin of Protective Layer

Polycarbonate (PC): "Iupilon E2000 FE5111" manufactured by MITSUBISHI GAS CHEMICAL COMPANY, INC.
Triacetyl cellulose (TAC): "TD 80UL" manufactured by FUJIFILM Corporation

### Adhesive

Urethane adhesive: two component adhesive, a mixture of "TM-593" and "CAT-RT85" manufactured by Toyo Morton Co., Ltd. at a mass ratio of 100:15
Acrylic adhesive: "Cybinol AT-250" manufactured by SAIDEN CHEMICAL INDUSTRY CO., LTD.

### Comparative Examples 1 to 5

A polarizing laminate and an optical lens were produced in the same manner as in Example 1 except that the material used, the thickness of each layer, the presence or absence of stretching, and the presence or absence of corona treatment were changed to the contents in Table 1. Physical properties of the resulting polarizing laminate and optical lens are shown in Table 1.

### Comparative Examples 6 to 7

A polarizing laminate and an optical lens were produced in the same manner as in Example 1 except that the material used, the thickness of each layer, the presence or absence of stretching, and the presence or absence of corona treatment were changed to the contents in Table 1, and the first protective layer and the second protective layer were simultaneously bonded to the polarizing layer. Physical properties of the resulting polarizing laminate and optical lens are shown in Table 1.

### [Table 1]

**Table 1**

| | First protective layer | | | | | First adhesive layer | | Polarizing layer | Second adhesive layer | | Second protective layer | | | | | Substrate layer |
|---|---|---|---|---|---|---|---|---|---|---|---|---|---|---|---|---|
| | Resin | Thickness (µm) | Stretched/ unstretehed | Corona treatment | R | Resin | Thickness (µm) | Resin | Resin | Thickness (µm) | Resin | Thickness (µm) | Stretched/ unstretched | Corona treatment | R | Resin |
| Example 1 | PA | 200 | Stretched | Presence | 2000 | Urethane | 10 | PVA | Urethane | 10 | PA | 200 | Stretched | Presence | 2000 | PA |
| Example 2 | PA | 200 | Stretched | Presence | 2000 | Urethane | 10 | PVA | Urethane | 10 | PA | 200 | Unstretched | Presence | 20 | PA |
| Example 3 | PA | 200 | Stretched | Absence | 2000 | Urethane | 6 | PVA | Urethane | 6 | PA | 200 | Stretched | Presence | 2000 | PA |
| Example 4 | PA | 200 | Stretched | Presence | 2000 | Urethane | 6 | PVA | Urethane | 10 | PA | 200 | Unstretched | Presence | 20 | PA |
| Example 5 | PC | 200 | Stretched | Presence | 2200 | Urethane | 10 | PVA | Urethane | 10 | PC | 200 | Stretched | Presence | 2200 | PC |
| Example 6 | PC | 300 | Stretched | Absence | 2450 | Urethane | 6 | PVA | Urethane | 6 | PC | 100 | Unstretched | Presence | 30 | PC |
| Example 7 | TAC | 80 | Unstretched | Presence | 10 | Urethane | 10 | PVA | Urethane | 10 | PA | 100 | Unstretched | Presence | 15 | PA |
| Example 8 | TAC | 80 | Unstretched | Absence | 10 | Urethane | 10 | PVA | Urethane | 10 | PA | 100 | Stretched | Presence | 1500 | PA |
| Example 9 | PA | 100 | Stretched | Presence | 1500 | Urethane | 4 | PVA | Urethane | 4 | PA | 100 | Stretched | Absence | 1500 | PA |
| Example 10 | PA | 300 | Stretched | Presence | 2450 | Urethane | 10 | PVA | Urethane | 10 | PA | 200 | Unstretched | Presence | 20 | PA |
| Example 11 | PA | 400 | Unstretched | Absence | 50 | Urethane | 50 | PVA | Urethane | 50 | PA | 400 | Unstretched | Presence | 50 | PA |
| Example 12 | PA | 200 | Stretched | Absence | 2000 | Acrylic | 30 | PVA | Acrylic | 30 | PA | 200 | Stretched | Presence | 2000 | PA |
| Example 13 | TAC | 80 | Unstretched | Presence | 10 | Acrylic | 30 | PVA | Acrylic | 30 | PA | 200 | Unstretched | Presence | 50 | PA |
| Example 14 | PA | 200 | Stretched | Presence | 2000 | Urethane | 80 | PVA | Urethane | 80 | PA | 200 | Stretched | Absence | 2000 | PA |
| Example 15 | PA | 200 | Stretched | Presence | 2000 | Urethane | 8 | PVA | Urethane | 10 | PA | 200 | Stretched | Presence | 2000 | PA |
| Example 16 | PA | 200 | Stretched | Absence | 2000 | Urethane | 10 | PVA | Urethane | 10 | PA | 200 | Stretched | Presence | 2000 | PA |
| Example 17 | PA | 100 | Stretched | Absence | 1500 | Urethane | 10 | PVA | Urethane | 10 | PA | 100 | Unstretched | Presence | 20 | PA |
| | | | | | | | | | | | | | | | | |
| Comparative Example 1 | PA | 200 | Stretched | Presence | 2000 | Acrylic | 110 | PVA | Acrylic | 110 | PA | 200 | Unstretched | Presence | 20 | PA |
| Comparative Example 2 | PC | 300 | Stretched | Absence | 2450 | Urethane | 110 | PVA | Urethane | 110 | PC | 300 | Stretched | Absence | 2450 | PC |
| Comparative Example 3 | PA | 200 | Stretched | Absence | 2000 | Urethane | 0.8 | PVA | Urethane | 0.8 | PA | 200 | Stretched | Absence | 2000 | PA |
| Comparative Example 4 | PA | 200 | Stretched | Absence | 2000 | Urethane | 0.8 | PVA | Urethane | 20 | PA | 200 | Stretched | Absence | 2000 | PA |
| Comparative Example 5 | TAC | 80 | Unstretched | Absence | 10 | Acrylic | 0.8 | PVA | Acrylic | 0.8 | PA | 200 | Unstretched | Absence | 20 | PA |
| Comparative Example 6 | PA | 200 | Stretched | Absence | 2000 | Urethane | 4 | PVA | Urethane | 4 | PA | 2000 | Stretched | Absence | 2000 | PA |
| Comparative Example 7 | PA | 280 | Stretched | Presence | 3700 | Jrethane | 4 | PVA | Urethane | 4 | PA | 2000 | Stretched | Presence | 2000 | PA |

**Table 1-continued**

| | **Peel strength** | | | **Recyclability** | **Durability** | **Peelability** |
|---|---|---|---|---|---|---|
| | **First peel strength (N/10 mm)** | **Second pool strength (NI10 mm)** | **Absolute value of difference (N/10 mm)** | **Evaluation** | **Evaluation** | **Evaluation** |
| Example 1 | 12.0 | 13.0 | 1.0 | A | A | A |
| Example 2 | 18.0 | 20.0 | 2.0 | A | A | A |
| Example 3 | 8.0 | 10.0 | 2.0 | A | A | A |
| Example 4 | 12.0 | 15.0 | 3.0 | A | A | A |
| Example 5 | 20.0 | 25.0 | 5.0 | A | A | A |
| Example 6 | 15.0 | 18.0 | 3.0 | A | A | A |
| Example 7 | 15.0 | 16.0 | 1.0 | A | A | A |
| Example 8 | 13.0 | 15.0 | 2.0 | A | A | A |
| Example 9 | 8.0 | 7.0 | 1.0 | A | A | A |
| Example 10 | 10.0 | 12.0 | 2.0 | A | A | A |
| Example 11 | 36.0 | 28.0 | 8.0 | A | A | A |
| Example 12 | 3.0 | 7.0 | 4.0 | A | A | A |
| Example 13 | 5.0 | 9.0 | 4.0 | A | A | A |
| Example 14 | 25.0 | 19.0 | 6.0 | A | A | A |
| Example 15 | 10.0 | 13.0 | 3.0 | A | A | A |
| Example 16 | 12.0 | 13.0 | 1.0 | A | A | A |
| Example 17 | 9.0 | 15.0 | 6.0 | A | A | A |
| | | | | | | |
| Comparative Example 1 | 40.0 | 42.0 | 2.0 | B | A | B |
| Comparative Example 2 | 35.0 | 41.0 | 6.0 | B | A | B |
| Comparative Example 3 | 0.5 | 0.5 | 0.0 | A | B | C |
| Comparative Example 4 | 0.5 | 9.0 | 8.5 | A | B | C |
| Comparative Example 5 | 0.2 | 1.5 | 1.3 | A | B | B |
| Comparative Example 6 | 7.8 | 7.9 | 0.1 | B | A | C |
| Comparative Example 7 | 12.0 | 12.1 | 0.1 | B | A | C |

In the table, R represents the retardation value (nm), and the absolute value of the difference represents the absolute value of the difference between the peel strength between the polarizing layer and the first protective layer and the peel strength between the polarizing layer and the second protective layer.

### Industrial Applicability

The present disclosure can provide an optical lens having both recyclability and durability, and a polarizing laminate that provides the optical lens. Taht is, the polarizing laminate of the present disclosure can be used for producting an optical lens.

### Reference Sing List

100 Polarizing laminate, 101 First protective layer, 102 Second protective layer, 103 First adhesive layer, 104 Second adhesive layer, 105 Polarizing layer
200 Optical lens, 201 Substrate layer

## Claims

1. A polarizing laminate comprising:
a first protective layer; and
a second protective layer,
the first protective layer being laminated on a surface of a polarizing layer with an adhesive layer interposed between the polarizing layer and the first protective layer, the second protective layer being laminated on another surface of the polarizing layer with an adhesive layer interposed between the polarizing layer and the second protective layer,
wherein
the polarizing laminate has a peel strength of from 2.0 to 30.0 N/10 mm as measured under a condition of a tensile speed of 100 mm/min, and
an absolute value of a difference between a peel strength between the polarizing layer and the first protective layer and a peel strength between the polarizing layer and the second protective layer is from 0.2 to 8.0 N/10 mm.

2. The polarizing laminate according to claim 1, wherein the adhesive layer is a layer including a cured product of a urethane adhesive.

3. The polarizing laminate according to claim 1 or 2, wherein the adhesive layer has a thickness of from 1.0 to 100.0 µm.

4. The polarizing laminate according to any one of claims 1 to 3, wherein one or more selected from the group consisting of the first protective layer and the second protective layer contain a polyamide resin.

5. The polarizing laminate according to claim 4, wherein the polyamide resin has a structure represented by Formula (4): 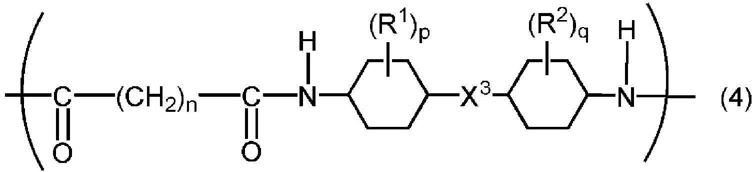 where
R¹ and R² each independently represent an alkyl group having carbon number of 1 to 4,
X³ represents an alkylene group having carbon number of 1 to 6,
n represents an integer of 1 or more, and
p and q each independently represent an integer of from 0 to 4.

6. The polarizing laminate according to any one of claims 1 to 5, wherein one or more selected from the group consisting of the first protective layer and the second protective layer have a retardation value of 300 nm or more.

7. The polarizing laminate according to any one of claims 1 to 6, wherein the polarizing layer contains polyvinyl alcohol.

8. An optical lens comprising:
the polarizing laminate according to any one of claims 1 to 7; and
a substrate layer.

9. The optical lens according to claim 8, comprising the substrate layer on a surface of the polarizing laminate.

10. The optical lens according to claim 9, wherein the substrate layer contains a polyamide resin having a structure represented by Formula (4): 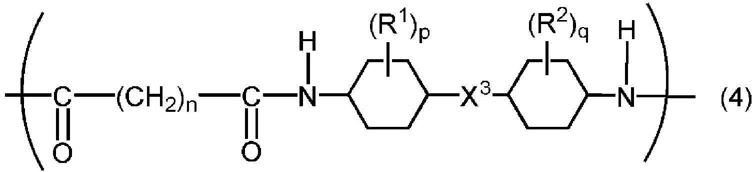 where
R¹ and R² each independently represent an alkyl group having carbon number of 1 to 4,
X³ represents an alkylene group having carbon number of 1 to 6,
n represents an integer of 1 or more, and
p and q each independently represent an integer of from 0 to 4.
